# EUROPÄISCHE PATENTSCHRIFT

(11) **EP 1 832 433 B1**
(45) Veröffentlichungstag und Bekanntmachung des Hinweises auf die Patenterteilung: **14.09.2011**
(21) Anmeldenummer: 06405099.0
(22) Anmeldetag: 07.03.2006
(51) Int. Cl.: B41M 1/24

(54) **Verfahren zum Prägen und Bedrucken eines Bedruckstoffes**
Process for embossing and printing a sheet
Procédé et installation pour gaufrer et imprimer des feuilles

(43) Veröffentlichungstag der Anmeldung: 12.09.2007
(73) Patentinhaber: Amcor Flexibles Kreuzlingen Ltd., 8280 Kreuzlingen (CH)
(72) Erfinder: Sieffert, Raymond, 68170 Rixheim (FR); Lüthi, Markus, 8460 Marthalen (CH); Weik, Micha, 8200 Schaffhausen (CH); Rosenberger, Carolina, 8218 Osterfingen (CH); Weber, Christian, 78262 Gailingen (DE)
(74) Vertreter: Burkhart, Hans

(56) Entgegenhaltungen:
- EP-A- 1 344 580
- DE-A1- 10 227 198
- PATENT ABSTRACTS OF JAPAN Bd. 006, Nr. 130 (M-143), 16. Juli 1982 (1982-07-16) & JP 57 056212 A (LONSEAL CORP), 3. April 1982 (1982-04-03)

## Beschreibung

Vorliegende Erfindung betrifft ein Verfahren zum Prägen und Bedrucken eines Bedruckstoffes nach dem Oberbegriff des Anspruchs 1.

Es ist bekannt, beispielsweise flächige Materialien zu prägen. Es werden Prägestempel oder Prägewalzen gegen das flächige Material gedrückt wobei sich im flächigen Material ein Abbild des Prägestempels oder der Prägewalze bildet. Typische Beispiele sind Metall- oder mit Kunststoff beschichtete Metallfolien, die mit einer Damast- oder Würmchenprägung versehen werden.

EP-A-1 344 580 offenbart ein Verfahren zur Herstellung eines Bandes aus Aluminium mit einer texturierten Oberfläche. Hierbei wird ein kaltgewalztes Band durch den Walzenspalt von zwei mit einem Rauheitsmuster versehenen Texturierwalzen geführt, und das Rauheitsmuster wird unter einer von den Texturierwalzen auf das Band wirkenden Kraft auf die Bandoberfläche übertragen.

DE-A-102 27 198 offenbart ein Verfahren zum Aufbringen eines Hologramms auf eine Materialbahn in einem Folienprägewerk, wobei gleichzeitig mit dem Aufbringen der Hologrammschicht auf die Materialbahn das Hologramm von einer Prägewalze erzeugt wird.

JP-A-57 056 212 offenbart ein Verfahren zur Herstellung eines bedruckten und geprägten Kunststofffolienbandes, bei welchem Verfahren ein geprägtes Formtrennpapier auf der Oberfläche des Prägemusters mit einem transparenten Kunstharz beschichtet wird. Nach Trocknung der Kunstharzbeschichtung wird diese mit Drucktinte bedruckt und auf ein Kunststofffolienband laminiert. Anschliessend wird das Formtrennpapier entfernt.

Bevorzugt erfolgt das Prägen von Folien, insbesondere für industrielle Mengen, kontinuierlich zwischen Prägewalzen. Die zu prägenden Folien können zur Verwendung beispielsweise als Verpackungsmaterialien vorgesehen sein. Dies bedeutet, dass die zu prägenden Folien bereits repetitiv oder im Register mit Werbeaufdrucken, Texten, Logos usw. bedruckt sind. Es stellt sich die Schwierigkeit dar, die Prägung auf die bedruckte Folien im Register, d.h. fortlaufend deckungsgleich mit dem Aufdruck, zu prägen. Darüber hinaus ist der Prägeprozess und dabei gerade die Bereitstellung der Prägewalzen ein ausgesprochen teures Vorhaben.

Aufgabe vorliegender Erfindung ist es die genannten Nachteile zu überwinden und ein verbessertes Prägeverfahren und einen neuen geprägten Bedruckstoff vorzuschlagen.

Erfindungsgemäss wird dies mit einem Verfahren mit den Merkmalen des Anspruchs 1 erreicht.

Geeignete Druckwerke zur Ausführung des Verfahrens sind beispielsweise Druckwerke in Tiefdruckmaschinen oder Flexodruckmaschinen.

Beim Tiefdruck oder Kupfertiefdruck mittels Tiefdruckmaschinen wird das Druckmotiv auf einen Formzylinder graviert. Die Vertiefungen der Gravur nehmen aus einer Farbwanne die Farbe auf. Die überschüssige Farbe wird mit einem Rakel abgestreift. Ein Druckzylinder oder Presseur drückt den Bedruckstoff gegen den Formzylinder, der die Farbe dann an das zu bedruckende Material abgibt.

Beim Flexodruck mittels Flexodruckmaschinen handelt es sich um ein Hochdruckverfahren. Die Farbe wird über eine Rasterwalze auf die erhabenen Elemente der Druckform und von dort direkt auf den Bedruckstoff übertragen. Beim Flexodruck ist die Druckform eine Fotopolymorplatte, beispielsweise eine vorgefertigte Druckform, die auf einen Formzylinder aufgespannt, angewendet wird. Beim Flexodruck sind die Druckelemente erhaben und ragen von der Druckform ab.

Die Druckform für das Verfahren nach vorliegender Erfindung ist in der Regel ein Formzylinder mit den daran angebrachten Druckelementen. Dem Formzylinder gegenüber angeordnet rollt ein Druckzylinder oder Presseur ab. Der Bedruckstoff wird zwischen den beiden Zylindern durchgeführt. Zwischen dem Formzylinder und dem Druckzylinder entsteht eine Flächenpressung. Beim Drucken mit Farben werden dabei die Farben auf den Bedruckstoff übertragen. Je nach Druck, ob schwarz-weiss Druck, Dreifarbendruck oder Vierfarbendruck, kann ein farbführendes Druckwerk oder können mehrere farbführende Druckwerke, insbesondere mit den Farben schwarz, cyan, magenta und gelb, in der Druckmaschine angeordnet sein. Zur Ausführung des erfinderischen Verfahrens sind zusätzlich zu den farbführenden Druckwerken ein oder mehrere Druckwerke, vorteilhaft in der Druckmaschine selbst angeordnet, vorhanden, welche die Prägung am Bedruckstoff anbringen. Das Druckwerk oder die Druckwerke zur Ausführung der Prägung sind vor und vorteilhaft nach dem oder den farbführenden Druckwerken angeordnet. Beim erfindungsgemässen Verfahren, beispielsweise für den Tiefdruck, ist die Druckform für die Prägung insbesondere ein Formzylinder mit eingravierten Druckelementen. In der Druckmaschine können die Formzylinder des oder der Druckwerke, welche die Prägung am Bedruckstoff anbringen, den gleichen Umfang oder Durchmesser, wie die Druckformen in den farbführenden Druckwerken aufweisen und die Druckwerke können durch den gleichen Antrieb oder einzeln durch separate Antriebe angetrieben werden. In anderer Form können in der Druckmaschine die Formzylinder des oder der Druckwerke, welche die Prägung am Bedruckstoff anbringen einen gegenüber der Druckformen in den farbführenden Druckwerken unterschiedlichen Umfang oder Durchmesser aufweisen und die Druckwerke werden in diesem Fall durch separate Antriebe angetrieben wobei die Antriebe vorteilhaft bezüglich der Umfangsgeschwindigkeit der Druckformen synchronisiert gesteuert werden.

Besonders vorteilhaft am erfinderischen Verfahren ist, dass der farbgebende Druck und die Prägung in der gleichen Druckmaschine, durch unmittelbar nacheinander angeordnete Druckwerke, erfolgt. Damit gelingt es die Druckfarben sowie die Prägung im Register, insbesondere verschiebungs- und verzerrungsfrei gegeneinander, am Bedruckstoff anzubringen. Wird ein Bedruckstoff nicht gleichzeitig im gleichen Druckwerk mit allen Farben bedruckt oder wie hier vorliegend auch noch geprägt, kann es durch das zusätzlich notwendig werdende Aufwickeln, Zwischenlagern und emeute Abwickeln des Bedruckstoffes zu gegenseitigen Verschiebungen der einzelnen Druckbilder und insbesondere der Prägebilder gegen die Druckbilder führen.

Gemäss vorliegender Erfindung wird das innerhalb des Druckverfahrens angeordnete Prägeverfahren, gleich wie ein Druckverfahren, ebenfalls mit einem gravierten Formzylinder, fallweise mit mehreren, gravierten Formzylindern, jedoch ohne Farbauftrag, als Blinddruck, ausgeführt. In vorliegendem Verfahren wird insbesondere in dem oder den Druckwerken zur Prägung keine Farbe auf den Formzylinder, resp. die Druckform gegeben. Der Formzylinder, resp. die Druckform, bringt allein die Prägung am Bedruckstoff an.

Die genannten Druckwerke werden vorteilhaft bei Raumtemperatur betrieben.

Die Prägung des Bedruckstoffes erfolgt in der Regel bei Umgebungs- oder Raumtemperatur. Eine Energiezufuhr an die Zylinderoberflächen oder den Bedruckstoff, wie eine Beheizung, während des Prägens ist in der Regel nicht vorgesehen. Eine Beheizung des Druckwerkes oder Teilen davon, wie die Beheizung des Formzylinders und/oder des Druckzylinders und/oder des Bedruckstoffes kann zweckmässig sein für das Prägen von Bedruckstoffen aus oder enthaltend Kunststoffschichten. Durch die Erwärmung kann die Viskosität der Kunststoffschicht sinken und den Prägeprozess dadurch beeinflussen. Der Bedruckstoff kann auch reaktive Schichten enthalten, die durch physikalische oder chemische Reaktion ihr Verhalten oder Zustand ändern, z.B. aushärten, polymerisieren, quellen, aufschäumen, sich in der Löslichkeit verändern etc., und die Verhaltensänderung kann sich während des Prägens, fallweise durch Energiezufuhr von aussen, einstellen.

Formzylinder mit eingravierten Druckelementen sind herstellbar, durch elektromechanische Gravur von Zylindern mit einer Metalloberfläche. Beispielsweise wird ein Text oder ein Bild durch eine Lesevorrichtung gelesen und digital gespeichert. Die gespeicherten Daten werden auf die Positionierung und den Antrieb eines Stichels übertragen. Die Bewegungen des Stichels bewirken, dass unter Materialabtrag von der Oberfläche des Formzylinders der Text oder das zu druckende Bildmotiv an sich oder als Raster in die Oberfläche des Formzylinders als Druckelemente eingraviert werden.

Die Formzylinder für die Druckfarben und für die Prägung, können nach vorliegender Erfindung beispielsweise im selben Layout-Programm oder Druckbild-Programm und dabei bevorzugt durch den gleichen bildverarbeitenden Prozessor sowie die daran angeschlossene mechanische Raster- oder Gravurerzeugung, insbesondere im gleichen Maschinenbett, bearbeitet werden. Durch die Steuerung der Gravurtiefe, des Gravursiebes oder Gravurrasters durch Erzeugung von Zellen und Trennwänden, d.h. der Druckelemente und Stützraster, und durch die Stichelform können für die Prägung optimierte Formzylinder erzeugt werden. Es ist auch möglich, an den Formzylinder für die Prägung nicht nur in die Tiefe gehende Gravuren als Druckelemente anzubringen, sondern wechselweise auch erhabene Druckelemente.

Die Prägung an sich kann u.a. durch das Material oder die Oberfläche des Druckzylinders oder Presseurs sowie die Härte oder Verformbarkeit der Oberflächenschicht des Druckzylinders oder Presseurs und auch durch die Gleitfaktoren zwischen den Zylindern und dem Bedruckstoff beeinflusst werden.

Die im Formzylinder, beispielsweise für den Tiefdruck oder Kupfertiefdruck, angebrachten Druckelemente können gegenüber der Oberfläche des Formzylinders in eine Tiefe von 60 bis 500 µm, zweckmässig von 60 bis 250 µm, vorteilhaft von 80 bis 200 µm und insbesondere von 100 bis 200 µm eingraviert sein.

Die im Formzylinder eingravierten Druckelemente können ein reduziertes Stützraster aufweisen oder stützrasterfrei sein. Beim Gravieren von Formzylindern für die Farbübertragung wird auf ein drucktypisches Stützraster abgezielt, um eine optimale Farbaufnahme, Farbübertragung und Farbabgabe zu erreichen. Gemäss vorliegender Erfindung werden mit dem Druckzylinder für die Prägung keine Farben übertragen. Deshalb kann das Stützraster, bezogen auf die Fläche des eingravierten Druckelementes, ganz -- zu 100% --, wegfallen oder das Stützraster kann lediglich bis zu 80% und insbesondere bis zu 50% der stützenden Fläche eines drucktypischen Stützrasters aufweisen.

Bezogen auf die wirksame, d.h. auf dem Bedruckstoff abrollende, Oberfläche eines Formzylinders können die eingravierten Druckelemente bis zu 80% und vorzugsweise bis zu 50% betragen. Zweckmässig trifft dies auch auf stützrasterfreie Druckelemente zu.

Beispielsweise beim Flexodruck oder einem anderen Hochdruckverfahren weist die Druckform erhabene oder abragende Druckelemente auf. Die Druckelemente beim Flexodruck oder einem anderen Hochdruckverfahren sind gegenüber der Oberfläche der Druckform erhaben und können 60 bis 500 µm, zweckmässig von 60 bis 250 µm, vorteilhaft von 80 bis 200 µm und insbesondere von 100 bis 200 µm abragen.

Um im Druckwerk die Druckelemente der Druckform dem Bedruckstoff als Prägung einzuprägen, wird der Bedruckstoff zwischen dem Formzylinder und einem Druckzylinder hindurchgeführt. Die beiden Zylinder rollen auf dem Bedruckstoff, üblicherweise unter voreingestellter Druckbeaufschlagung ab.

Der Druckzylinder kann eine unverformbare, verformbare oder elastische Oberflächenschicht aufweisen. Die Oberfläche des Druckzylinders ist in der Regel glatt und weist keine Druckelemente auf. Beispielsweise kann der Druckzylinder eine Stahlwalze mit einer Oberfläche aus Stahl sein. Beim Druckzylinder kann es sich fallweise auch um eine Stahlwalze mit einer Oberflächenschicht aus elastischem Material, wie Gummi, oder aus Papier oder um eine Gummiwalze handeln. Der Anpressdruck des Druckzylinders an den Formzylinder kann eingestellt werden. Für den vorliegenden Prägeprozess können beispielsweise Drücke von bis zu 3 t pro Meter wirksamer Zylinderbreite, zweckmässig bis zu 2 t pro m, vorteilhaft bis zu 1,5 t pro m, besonders vorteilhaft bis zu 1 t pro m und insbesondere bis zu 0,5 t pro m angewendet werden. Die Minimaldrücke können bei 0,2 t pro m wirksamer Zylinderbreite und vorzugsweise bei 0,4 t pro m liegen. Typische Zylinderbreiten reichen von 200 mm bis 5600 mm und bevorzugt von 500 bis 1200 mm. Fallweise kann im Druckwerk eine Unterlage, ein sog. Underlay, eingesetzt werden.

Zwischen dem Walzenpaar aus Formzylinder und Druckzylinder wird dem Bedruckstoff entsprechend den Druckelementen am Formzylinder das Druckbild eingeprägt. Die Prägetiefe am Bedruckstoff kann durch die Tiefe der Gravur im Formzylinder, durch die Steuerung des Anpressdruckes des Druckzylinders an den Formzylinder und die Materialbeschaffenheit der Oberflächenschicht des Druckzylinders verändert werden.

In einer wahlweisen Ausführungsform kann auch der Druckzylinder ein Formzylinder darstellen und Druckelemente aufweisen. Ein solcher als Formzylinder eingesetzter Druckzylinder kann insbesondere das Negativbild, resp. die Druckelemente in Negativform, aufweisen und die Druckelemente des Formzylinders und die negativen Druckelemente des Druckzylinders wirken simultan auf den Bedruckstoff ein. Das bedeutet, dass der Druckzylinder ebenfalls ein Formzylinder mit dem eingeprägten Negativ der Druckelemente des anderen Formzylinders ist. Der beschriebene Druckzylinder, resp. andere Formzylinder, stellt demnach die Gegenform oder Patrize dar. Insbesondere können erhabene Teile des geprägten Motivs auf der einen Formzylinderoberfläche in die eingravierten, resp. getieften, Motivteile in der Oberfläche des anderen Formzylinders eingreifen. Entsprechend stark wird der zwischen den beiden Zylindern durchlaufende Bedruckstoff verformt und mit der Prägung versehen.

Es ist weiters auch möglich, zwei verschiedene Formzylinder in separaten Druckwerken auf den Bedruckstoff derart einwirken zu lassen, dass der eine Formzylinder die Prägung in einer Richtung, der andere Formzylinder eine weitere Prägung in der anderen Richtung dem Bedruckstoff verleiht. Eine Prägung von beiden Seiten her auf den Bedruckstoff kann auch durch Umlenkung des Bedruckstoffes mittels eines Wendekreuzes in der Druckmaschine erfolgen.

Es ist auch möglich, den Bedruckstoff zwischen verschiedenen Formzylindern gegen die gleiche Druckwalze oder gegen jeweils separate Druckwalzen gepresst durchzuführen und dem Bedruckstoff nacheinander verschiedene, sich überlagernde oder gestuft getiefte Druckbilder oder Druckmotive einzuprägen.

Schliesslich sei auch die Möglichkeit erwähnt, das Druckwerk nur zur Prägung zu benutzen und keine farbführenden Druckwerke einzusetzen. Diese Anwendung ist von hohem Interesse für die Erzeugung von Bedruckstoffen und für Bedruckstoffe an sich, die mit Druckfarben, Tonern, Tinten, Lösungsmitteln und dergl. inkompatibel sind, an denen jedoch statt eines Aufdruckes wenigstens eine Prägung angebracht werden kann.

Gemäss vorliegender Erfindung können im Druckwerk beispielsweise die Druckelemente der Druckform dem Bedruckstoff als Prägung, als hervorstehendes Muster, als reliefartige Erhebungen, als hologrammtaugliches Muster oder als Punkt- oder Brailleschrift oder als Schwächung, als Lochung oder als Perforation oder Falzlinien eingeprägt werden. Selbstredend können die unterschiedlichen Prägungen in einem Druckwerk durch denselben Formzylinder am selben Bedruckstoff in beliebiger Kombination vorgenommen werden.

Die in einem oder mehreren Druckwerken zwischen dem Formzylinder und dem Druckzylinder am Bedruckstoff angebrachten Prägungen als Erhebungen oder Vertiefungen können fallweise in einem weiteren Druckwerk mit Form- und Druckzylinder mit glatter Oberfläche zur Begrenzung oder Prägetiefe, resp. zur Glättung oder Dämpfung der Prägestruktur, durchgeführt werden. Durch eine Steuerung des Anpressdruckes kann dabei die gewünschte Prägetiefe angepasst werden.

Geprägte Bedruckstoffe sind solche, deren Prägung in einem Druckwerk mit den Druckelementen oder dem Druckmotiv einer Druckform, insbesondere einer Druckform am oder auf einem Formzylinder, am Bedruckstoff angebracht wurde.

Beispiele von Bedruckstoffen sind solche, deren Druckmotiv als Prägung von der Oberfläche des Bedruckstoffes 20 bis 500 µm, zweckmässig von 50 bis 250 µm, vorteilhaft von 70 bis 200 µm und insbesondere von 80 bis 200 µm, abragt. In der Regel ragt das Druckmotivbild einseitig vom Bedruckstoff ab. Wurde die Prägung zwischen zwei Formzylindem oder von beiden Richtungen geprägt, durchgeführt, kann die Prägung wechselseitig entsprechend auf jede Seite des Bedruckstoffes in der angegebenen Höhe abragen.

Als Bedruckstoff können insbesondere folienförmige Materialien verwendet werden. Beispiele sind Metallfolien, wie Stahlfolien und insbesondere Aluminiumfolien, Kunststofffolien, Papiere oder Pappe. Weitere Beispiele sind Verbundfolien, Schichtstoffe und Laminate aus Kunststoffen, aus Kunststoffen und Metallfolien, aus Kunststoffen und Papier, aus Kunststoffen und Pappe, aus Metallfolien und Papier, aus Metallfolien und Pappe oder aus Kunststoffen, Metallfolien und Papier oder aus Metallfolien, Kunststoffen und Pappe.

Werden als Bedruckstoffe oder als Teil von Bedruckstoffen Kunststofffolien eingesetzt, so sind z.B. geeignete Kunststofffolien aus Polyvinylchlorid, Polyamiden, Polyestem, Polycarbonaten, Polyolefinen, insbesondere Polyethylen oder Polypropylen, Polystyrolen usw. Die Kunststofffolien können auch Copolymere darstellen. Die Kunststofffolien können auch aus zwei oder mehreren Lagen durch Kaschieren, Coextrusion usw. gebildete Laminate sein. Die Dicke der einzelnen Kunststofffolien oder Kunststoffschichten kann von 12 bis 250 µm, zweckmässig von 15 bis 100 µm und vorteilhaft von 20 bis 50 µm betragen. Die Folien können durchsichtig, durchscheinend, opak oder gefärbt sein. Die Kunststofffolien können siegelbar sein oder auf einer oder auf beiden Seiten mit einer Siegelschicht oder einem Siegellack ausgerüstet sein.

Werden als Bedruckstoffe oder in Bedruckstoffen Folien aus Metall, wie Aluminium, angewendet, so kann deren Dicke von 12 bis 200 µm, zweckmässig 15 bis 100 µm und vorteilhaft von 20 bis 50 µm betragen, Die Aluminiumfolien können aus Reinaluminium mit einer Reinheit von 99% bis 99,5% oder aus einer Aluminiumlegierung hergestellt sein. Der Werkstoffzustand des Aluminiums kann weich bis hart oder walzhart sein. Die Aluminiumfolien können ein- oder beidseitig gebürstet, geätzt, gefärbt, anodisiert, neutralisiert, schutzlackiert und/oder lackiert sein.

Weitere Bedruckstoffe sind Laminate aus Metallfolien unter sich, aus Kunststofffolien unter sich oder aus Kunststoff- und Metallfolien. Als Beispiel können Laminate aus einer Aluminiumfolie, die ein- oder beidseitig mit Polyesterfolien oder mit Polyolefinfolien beschichtet oder kaschiert ist, genannt werden. Geeignete Bedruckstoffe sind auch Laminate oder Schichtstoffe aus Pappe oder Papier und wenigstens einer Kunststoffschicht. Der Fachwelt sind solche Materialien z.B. als Mixpap bekannt. Zwischen den einzelnen Schichten der Laminate oder Schichtstoffe können fallweise, Klebstoffe, Primer und Sperrschichten usw., auf den nach aussen weisenden Seiten Sperrschichten und Siegelschichten usw., angeordnet sein.

Andere Bedruckstoffe sind Papiere mit Flächengewichten von 80 bis 300 g/m² und zweckmässig von 100 bis 270 g/m². Die Papiere können ein- oder beidseitig kaschiert oder glanzkaschiert sein.

An vorliegenden Bedruckstoffen kann das eingeprägte Druckmotiv eine Prägung oder hervorstehendes Muster sein. Die Prägung kann ein optisch hervorstehendes Muster, beliebige Zahlen- oder Buchstabenfolge, graphische Elemente, Motive, Bilder, beliebige repetitive Muster, z.B. Ornamente, Damastoder Paisleymuster, usw. sein. Es können auch holograrnmtaugliche Muster erzeugt werden. An Bedruckstoffen nach vorliegender Erfindung kann eine Punkt- oder Brailleschrift angebracht werden. Nach der Erfindung ist es möglich, dass am Bedruckstoff kleinste Prägungen, wie Bildmotive oder Schriften, in einer Bild- oder Schrifthöhe von 0,5 mm und kleiner, am Bedruckstoff anzubringen. Vorliegende Erfindung umfasst auch Bedruckstoffe mit Prägungen, wie Bildmotiven oder Schriften, mit einer Bild- oder Schrifthöhe von 0,5 mm und kleiner.

Das im Bedruckstoff eingeprägte Druckmotiv kann eine Schwächung, eine Lochung und/oder eine Perforation sein. Selbstverständlich können alle genannten Prägungen einzeln oder in beliebiger Kombination an einem Bedruckstoff angebracht sein.

Nach dem Verfahren vorliegender Erfindung werden die durch Farbe erzeugten Druckmotive und Prägungen in wenigstens einer und insbesondere in der gleichen Druckmaschine auf den Bedruckstoff aufgebracht. Die Druckformen, wie die Formzylinder mit den eingravierten Druckelementen können, sowohl für die farbführenden als auch die prägenden Druckformen, auf die gleiche einfache und kostengünstige Weise hergestellt und in der gleichen Einfachheit und Schnelligkeit in der Druckmaschine montiert oder ausgetauscht werden. Dies ermöglicht einen schnellen und kostengünstigen Wechsel, sowohl der farbigen Druckmotive, als auch der Prägungen, am Bedruckstoff.

Die mit dem erfindungsgemässen Verfahren hergestellten Bedruckstoffe finden z.B. Anwendung als Verpackungsmaterialien für Gegenstände aller Art, einschliesslich Nahrungsmittelverpackungen, Verpackungen in der Medizin und Pharmazie, Medikamentenverpackungen, Verpackungen für Raucherwaren, wie Zigaretten-, Zigarren- oder Schnitttabakverpackungen. Weitere Verwendungen sind Tapeten und weitere flächige Dekorationsmaterialien. Werden die Bedruckstoffe zu Verpackungsmaterialien verarbeitet, so können die Einprägungen unverfälschbare Sicherheits-, Ursprungs- und Originalitätsnachweise an Verpackungen darstellen. Die Einprägungen können das mit Druckfarbe erzeugte Druckbild oder Druckmotiv durch die optisch erhabenen Elemente ergänzen oder verstärken. Während dem Prozess des Bedruckens können am Bedruckstoff, z.B. einem später als Verpackungsmaterial eingesetzten Bedruckstoff, Schwächungen, z.B. als spätere Aufreisshilfen oder Reisslinien, wie Perforationen, oder Punktoder Brailleschriften, insbesondere im Register, d.h. lagegenau, angebracht werden. Druckmotive und optisch erhabene Elemente und/oder Schwächungen können einander überlagern. Da die einzelnen Elemente im gleichen Druckwerk auf den Bedruckstoff im Register auf-, resp. angebracht werden, kann die jeweilige Lage der Elemente zu- oder übereinander vorbestimmt werden und nach dem Verlassen des Druckwerkes liegen die Elemente an vorbestimmter Stelle nebeneinander oder übereinander auf dem Bedruckstoff. Beispielsweise Bedruckstoffe, die als Verpackungsmaterialien eingesetzt werden sollen, können Schwächungen, wie Perforationen als Aufreisshilfen oder Reisslinien, und zugehörige Bildmotive, wie Hinweise auf die Aufreisshilfe, enthalten und es können daraus auf einfachste Weise Verpackungen in hoher Qualität bezüglich der Überlagerung von Druckmotiv, optisch erkennbaren Erhebungen und Aufreisshilfen gefertigt werden.

### Beispiele:

Verschiedene Bedruckstoffe werden in einem Druckwerk zwischen einem Formzylinder und einem Druckzylinder durchgeführt und dabei das am Formzylinder angebrachte Druckmotiv dem Bedruckstoff eingeprägt. Das Druckmotiv ist 70, resp. 120 µm, tief in die Oberfläche des Formzylinders eingraviert ("Gravurtiefe"). Der Druckzylinder hat eine glatte ungeprägte Oberfläche. Die Vorschubgeschwindigkeit des Bedruckstoffes beträgt bei allen Versuchen 20 m/sec². Bei verschiedenen Versuchen wurde der Bedruckstoff mit einer Unterlage, vorliegend einem Papier mit einem Flächengewicht von 270g/m², zwischen den Formzylinder und dem Druckzylinder geprägt. Die Unterlage ist dem Druckzylinder, der Bedruckstoff dem Formzylinder zugewandt. Das am Bedruckstoff erzeugte geprägte Druckbild wird bewertet, wobei scharf abzeichnende oder deutlich sichtbare Prägebilder als optisch hervorstehende Muster im Bedruckstoff zu sehen sind.

| No. | Gravurtiefe in µm | Bedruckstoff, Dicke in µm | Walzendruck | Unterlage | Resultat |
|---|---|---|---|---|---|
| 1 | 70 | Aluminium Folie, hart, 20µm | 1,5t | nein | ++ |
| 2 | 70 | Papier, 270g/m² | 2t | nein | ++ |
| 3 | 120 | Aluminium Folie, hart, 20µm | 1.5t | ja | +++ |
| 4 | 120 | Aluminium Folie, hart, 20µm | 1.5t | nein | +++ |
| 5 | 120 | Laminat: Al 30µm/PET 12µm 1) | 1,5t | nein | +++ |
| 6 | 120 | Aluminium Folie, hart, 20µm | 1,5t | nein | +++ |
| 7 | 120 | Aluminium Folie, hart. 20µm | 1,5t | ja | +++ |
| 8 | 120 | Aluminium Folie, hart, 20µm | 2t | neln | +++ |
| 9 | 120 | Aluminium Folie, hart, 20µm | 2t | ja | +++ |

| | | | | | |
|---|---|---|---|---|---|
| 1) Laminat Al 30µm/PET 12µm = Laminat aus Aluminium Folie der Dicke 30 µm und einer Polyesterfolle der Dicke von 12 µm Scharfes Prägebild +++ Deutliches Prägebild ++ Erkennbares Prägebild + | | | | | |

## Patentansprüche

1. Verfahren zum Prägen und Bedrucken eines Bedruckstoffes, bei welchem
Verfahren der Bedruckstoff zwischen wenigstens einem Walzenpaar geprägt und in einer Druckmaschine mittels wenigstens eines farbführenden Druckwerkes über Druckelemente einer Druckform Farbe auf den Bedruckstoff übertragen wird,
**dadurch gekennzeichnet, dass**
der Bedruckstoff in der gleichen Druckmaschine in wenigstens einem nicht farbführenden Druckwerk über die Druckelemente einer Druckform geprägt wird, wobei die Druckwerke unmittelbar nacheinander angeordnet sind.

2. Verfahren nach Anspruch 1, **dadurch gekennzeichnet, dass** die Druckform ein Formzylinder mit als Vertiefungen eingravierten Druckelementen ist.

3. Verfahren nach den Ansprüchen 1 und 2, **dadurch gekennzeichnet, dass** die im Formzylinder eingravierten Druckelemente gegenüber einer Oberfläche des Formzylinders in einer Tiefe von 60 bis 500 µm, zweckmässig von 60 bis 250 µm, vorteilhaft von 80 bis 200 µm, und insbesondere von 100 bis 200 µm eingraviert sind.

4. Verfahren nach einem der Ansprüche 1 bis 3, **dadurch gekennzeichnet, dass** in die zum Prägen vorgesehenen Formzylinder Druckelemente mit reduziertem oder ohne Stützraster eingraviert sind.

5. Verfahren nach Anspruch 1, **dadurch gekennzeichnet, dass** die Druckform auf einem Formzylinder angebracht ist und Druckelemente von der Druckform abragen.

6. Verfahren nach den Ansprüchen 1 und 5, **dadurch gekennzeichnet, dass** die auf dem Formzylinder angebrachte Druckform Druckelemente enthält, die gegenüber der Oberfläche des Formzylinders von 60 bis 500 µm, zweckmässig von 60 bis 250 µm, vorteilhaft von 80 bis 200 µm und insbesondere von 100 bis 200 µm abragen.

7. Verfahren nach einem der Ansprüche 1 bis 6, **dadurch gekennzeichnet, dass** im Druckwerk die Druckelemente der Druckform dem Bedruckstoff als Prägung eingeprägt werden, wobei der Bedruckstoff zwischen dem Formzylinder und einem Druckzylinder geprägt wird und der Druckzylinder die negativen Druckelemente der Druckform aufweist und die Druckelemente des Formzylinders und die negativen Druckelemente des Druckzylinders simultan auf den Bedruckstoff einwirken.

8. Verfahren nach einem der Ansprüche 1 bis 7, **dadurch gekennzeichnet, dass** im Druckwerk die Druckelemente der Druckform dem Bedruckstoff als Prägung, als hervorstehendes Muster, als hologrammtaugliches Muster oder als Punkt- oder Brailleschrift eingeprägt wird.

9. Verfahren nach einem der Ansprüche 1 bis 8, **dadurch gekennzeichnet, dass** im Druckwerk das Druckbild der Druckform dem Bedruckstoff als Schwächung, als Lochung oder als Perforation eingeprägt wird.

10. Verfahren nach einem der Ansprüche 1 bis 9, **dadurch gekennzeichnet, dass** der Bedruckstoff eine Metallfolie, insbesondere eine Stahlfolie oder eine Aluminiumfolie, eine Kunststofffolie, ein Papier, eine Pappe oder Verbundfolien aus Kunststoffen, aus Kunststoffen und Metallfolien, aus Kunststoffen und Papier, aus Kunststoffen und Pappe, aus Metallfolien und Papier, aus Metallfolien und Pappe, aus Kunststoffen, Metallfolien und Papier oder aus Kunststoffen, Metallfolien und Pappe, enthält oder daraus besteht.

## Claims

1. Method for embossing and printing a substrate, in which method the substrate is embossed between at least one pair of rollers and ink is transferred to the substrate by means of at least one ink-bearing printing unit via printing elements of a printing plate, **characterised in that** the substrate in the same printing machine is embossed via the printing elements of a printing plate in at least one non-ink-bearing printing unit, the printing units being arranged in direct succession.

2. Method according to claim 1, **characterised in that** the printing plate is a plate cylinder having engraved printing elements as recesses.

3. Method according to claim 1 and claim 2, **characterised in that** the printing elements engraved in the plate cylinder are engraved to a depth of 60 to 500 µm, expediently from 60 to 250 µm, advantageously from 80 to 200 µm and in particular from 100 to 200 µm with respect to a surface of the plate cylinder.

4. Method according to any one of claims 1 to 3, **characterised in that** the printing elements provided in the plate cylinder for embossing are engraved with a reduced support grid or without a support grid.

5. Method according to claim 1, **characterised in that** the printing plate is mounted on a plate cylinder and printing elements protrude from the printing plate.

6. Method according to claims 1 and 5, **characterised in that** the printing plate mounted on the plate cylinder contains printing elements which protrude from 60 to 500 µm, expediently from 60 to 250 µm, advantageously from 80 to 200 µm and in particular from 100 to 200 µm with respect to the surface of the plate cylinder.

7. Method according to any one of claims 1 to 6, **characterised in that** in the printing unit the substrate is embossed with the printing elements of the printing plate as embossing, wherein the substrate is embossed between the plate cylinder and a pressure cylinder, and the pressure cylinder comprises the negative printing elements of the printing plate and the printing elements of the plate cylinder and the negative printing elements of the pressure cylinder act simultaneously on the substrate.

8. Method according to any one of claims 1 to 7, **characterised in that** in the printing unit the substrate is embossed with the printing elements of the printing plate as embossing, as a raised pattern, as a pattern suitable for holograms or as a dot-like or Braille-type script.

9. Method according to any one of claims 1 to 8, **characterised in that** in the printing unit the substrate is embossed with the printing image of the printing plate as weakened areas, as holes or as perforations.

10. Method according to any one of claims 1 to 9, **characterised in that** the substrate contains or consists of a metal film, in particular a steel film or an aluminium film, a plastics material film, a paper, a cardboard or composite films made of plastics materials, of plastics materials and metal films, of plastics materials and paper, of plastics materials and cardboard, of metal films and paper, of metal films and cardboard, of plastics materials, metal films and paper or of plastics materials, metal films and cardboard.

## Revendications

1. Procédé de gaufrage et d'impression d'une matière à imprimer, dans lequel procédé la matière à imprimer est gaufrée entre au moins une paire de rouleaux et dans une machine d'impression, à l'aide d'au moins un outil d'impression introduisant de la couleur, de la couleur est transférée sur la matière à imprimer par des éléments d'impression d'un modèle d'impression,
**caractérisé en ce que**
la matière à imprimer est gaufrée dans la même machine d'impression dans au moins un outil d'impression n'introduisant pas de couleur par les éléments d'impression d'un modèle d'impression, les outils d'impression étant disposés directement les uns après les autres.

2. Procédé selon la revendication 1, **caractérisé en ce que** le modèle d'impression est un cylindre gravé avec des éléments d'impression gravés dans celui-ci dans la forme d'empreintes.

3. Procédé selon les revendications 1 et 2, **caractérisé en ce que** les éléments d'impression gravés dans le cylindre gravé sont gravés à l'intérieur face à une surface du cylindre gravé dans une profondeur de 60 à 500 µm, de préférence de 60 à 250 µm, encore mieux de 80 à 200 µm et bien mieux encore de 100 à 200 µm.

4. Procédé selon l'une quelconque des revendications 1 à 3, **caractérisé en ce que**, dans les cylindres gravés prévus pour le gaufrage, des éléments d'impression sont gravés avec une trame de support réduite ou inexistante.

5. Procédé selon la revendication 1, **caractérisé en ce que** le modèle d'impression est appliqué sur un cylindre gravé et des éléments d'impression dépassent du modèle d'impression.

6. Procédé selon les revendications 1 et 5, **caractérisé en ce que** le modèle d'impression appliqué sur le cylindre gravé contient des éléments d'impression, qui dépassent de la surface du cylindre gravé de 60 à 500 µm, de préférence de 60 à 250 µm, encore mieux de 80 à 200 µm et bien mieux encore de 100 à 200 µm.

7. Procédé selon l'une quelconque des revendications 1 à 6, **caractérisé en ce que**, dans l'outil d'impression, les éléments d'impression du modèle d'impression sont gaufrés dans la matière à imprimer dans la forme d'un gaufrage, la matière à imprimer étant gaufrée entre le cylindre gravé et un cylindre d'impression et le cylindre d'impression présentant les éléments d'impression négatifs du modèle d'impression et les éléments d'impression du cylindre gravé et les éléments d'impression négatifs du cylindre d'impression agissant simultanément sur la matière à imprimer.

8. Procédé selon l'une quelconque des revendications 1 à 7, **caractérisé en ce que**, dans l'outil d'impression, les éléments d'impression du modèle d'impression sont gaufrés dans la matière à imprimer dans la forme d'un gaufrage, dans la forme d'un modèle en relief, dans la forme d'un modèle apte à un hologramme ou dans la forme d'une écriture à points ou Braille.

9. Procédé selon l'une quelconque des revendications 1 à 8, **caractérisé en ce que**, dans l'outil d'impression, l'image d'impression du modèle d'impression est gaufrée dans la matière à imprimer dans la forme d'une atténuation, dans la forme d'un poinçonnage ou dans la forme d'une perforation.

10. Procédé selon l'une quelconque des revendications 1 à 9, **caractérisé en ce que** la matière à imprimer contient une feuille métallique, en particulier une feuille d'acier ou une feuille d'aluminium, une feuille de matière plastique, un papier, un carton ou des feuilles composites de matières plastiques, de matières plastiques et de feuilles métalliques, de matières plastiques et de papier, de matières plastiques et de carton, de feuilles métalliques et de papier, de feuilles métalliques et de carton, de matières plastiques, de feuilles métalliques et de papier ou de matières plastiques, de feuilles métalliques et de carton ou est constituée de ceux-ci.
